# EUROPÄISCHE PATENTSCHRIFT

(11) **EP 0 452 674 B1**
(45) Veröffentlichungstag und Bekanntmachung des Hinweises auf die Patenterteilung: **28.07.1993**
(21) Anmeldenummer: 91103798.4
(22) Anmeldetag: 13.03.1991
(51) Int. Cl.: A47L 13/51

(54) **Reinigungswagen**
Cleaning trolley
Chariot de nettoyage

(30) Priorität: 14.04.1990 DE 9004319 U
(43) Veröffentlichungstag der Anmeldung: 23.10.1991
(73) Patentinhaber: VERMOP SALMON GMBH, D-97877 Wertheim (DE)
(72) Erfinder: Kühlinger, Gerhard, c/o Keil & Schaafhausen, W-6000 Frankfurt am Main 1 (DE)
(74) Vertreter: Keil, Rainer A., Dipl.-Phys. Dr.

(56) Entgegenhaltungen:
- DE-A- 2 741 836
- DE-A- 3 037 442
- DE-U- 8 509 181

## Beschreibung

Die Erfindung betrifft einen Reinigungswagen zum Transport von Behältern wie Eimern oder dgl., mit einem im wesentlichen aus Seitenbügeln und Querstreben bestehenden Grundgestell, welches mit Lenkrollen und einer zur Aufnahme eines Pressenstativs ausgebildeten Mittelstrebe sowie mit einem Handhabungsbügel versehen ist. Ein solcher Reinigungswagen ist in DE-A- 2 741 836 dargestellt.

Derartige bekannte Reinigungswagen werden vor allem zum Reinigen größerer Flächen, wie bspw. in Krankenhäusern, Hotels, Büros und dgl., insbesondere zum Naßwischen mit sogenannten Naßwischmops eingesetzt. Ein solcher Reinigungswagen ist i.d.R. mit zwei Eimern bestückt, von denen der eine mit klarem Wasser und der andere mit reinigungs- und/oder desinfektionsmittelhaltigem Wasser gefüllt ist. Der Mopbezug wird nach dem Wischen zunächst in den Eimer mit dem klaren Wasser eingetaucht, um den Schmutz auszuwaschen, und anschließend in den Eimer mit dem Reinigungs- und/oder Desinfektionsmittel eingetaucht. Mit Hilfe einer an der Mittelstrebe angebrachten Presse kann die jeweils überschüssige Flüssigkeit ausgepreßt werden. Danach kann der Mop erneut zum Wischen eingesetzt werden. Je nach Größe der Eimer und nach Verwendungszweck werden derartige Reinigungswagen in verschiedenen Abmessungen und Ausführungen hergestellt. Als nachteilig erweist sich bei diesen bekannten Reinigungswagen, daß sie aufgrund der relativ geringen Stückzahl in den jeweiligen Größen- und Ausführungsvarianten kostenintensiv in der Herstellung sind, da viele verschieden bemessene Einzelteile hergestellt und bevorratet werden müssen. Darüberhinaus ist auch die Montage der Einzelteile bisher aufwendig und teuer, da diese i.d.R. miteinander verschweißt werden. Die Umrüstung eines solchen Reinigungswagens auf einen neuen Verwendungszweck ist aufgrund der Schweißverbindung der einzelnen Bauteile nicht möglich.

Aufgabe der vorliegenden Erfindung ist die Schaffung eines Reinigungswagens der eingangs genannten Art, welcher aus kostengünstig herstellbaren, gegen Reinigungsmittel unempfindlichen und nach Art eines Bausatzes verwendbaren Teilen leicht zu montieren und ggfs. zu demontieren ist.

Diese Aufgabe wird erfindungsgemäß im wesentlichen dadurch gelöst, daß zumindest die Querstreben aus Kunststoff bestehen und die Seitenbügel und die Querstreben lösbar miteinander verbunden sind. Auf diese Weise brauchen bspw. zur Verbreiterung des Reinigungswagens lediglich die Querstreben durch längere Querstreben ersetzt werden, welche kostengünstig aus Kunststoff hergestellt werden können. Ein solcher Reinigungswagen kann daher mit geringem Aufwand auf unterschiedliche Eimergrößen und Verwendungszwecke ausgelegt werden, indem die gleichen Seitenbügel verwendet werden. Auch können gleich breite aber unterschiedlich lange Reinigungswagen montiert werden, indem gleiche Querstreben der unterschiedlich großen Seitenbügel eingesetzt werden. Bei Beschädigung eines einzelnen Bauteils kann dieses Bauteil einfach ersetzt werden, so daß der Reinigungswagen weiterhin benutzt werden kann. Bei Weiterentwicklung einzelner Bauteile oder Bauteilgruppen können diese um- bzw. nachgerüstet werden, so daß der Reinigungswagen stets der aktuellen Entwicklung angepaßt werden kann.

Bei einer besonders vorteilhaften Weiterbildung der Erfindung sind die Seitenbügel mit den Querstreben z.B. im Preßsitz zusammengesteckt oder zusammengeklemmt, wodurch eine besonders einfache und montagegünstige Verbindung gewährleistet ist.

Wenn die Mittelstrebe aus Kunststoff besteht und lösbar an den Seitenbügeln angebracht ist, kann diese zum einen kostengünstig in beliebiger Formgebung hergestellt und zum anderen ausgetauscht bzw. zusammen mit verschiedenen Seitenbügeln verwendet werden.

Dabei ist es besonders zweckmäßig, wenn die Mittelstrebe mit den Seitenbügeln z.B. im Preßsitz zusammengesteckt oder zusammengeklemmt ist, um auch insoweit eine einfache Montage und zugleich einen sicheren Halt zu gewährleisten.

Um eine besonders stabile und verwindungssteife Befestigung zu erzielen, ist bei einer weiteren Ausgestaltung der Erfindung vorgesehen, daß die Mittelstrebe die Seitenbügel im wesentlichen formschlüssig umgreift.

Bei einer weiteren vorteilhaften Ausgestaltung der Erfindung ist die Mittelstrebe mittels Spannelementen an den Seitenbügeln angeklemmt, wodurch eine stabile Rahmenkonstruktion und zugleich eine besonders schnelle und einfache Montage gewährleistet sind.

Eine einfache und wirkungsvolle Montagesicherung für die Mittelstrebe wird bei einer weiteren vorteilhaften Ausgestaltung der Erfindung dadurch erzielt, daß die Mittelstrebe mittels eines Sicherungsstiftes oder dgl. an den Seitenbügeln gesichert ist.

Besonders vorteilhaft ist es, wenn die Mittelstrebe zugleich zur Aufnahme des Handhabungsbügels dient, welche an dieser angesteckt oder angeklemmt werden kann. Auf diese Weise kann auf zusätzliche Befestigungselemente verzichtet werden.

Es hat sich bei Reinigungswagen als zweckmäßig erwiesen, den Handhabungsbügel verschwenkbar zwischen Anschlägen zu führen, um den Reinigungswagen in beide Fahrtrichtungen ziehen bzw. schieben zu können und um die Zugänglichkeit zu den Eimern zu verbessern. Es ist daher besonders vorteilhaft, die Anschläge für den Handhabungsbügel, wie bei einer weiteren vorteilhaften Ausgestaltung der Erfindung, ebenfalls an der Mittelstreben vorzusehen.

Um eine sichere Führung des Handhabungsbügels zu gewährleisten, kann dieser mittels Stiften in Nuten der Mittelstrebe bzw. der Spannelemente geführt sein. Die Anschläge können in diesem Fall auch von Abschnitten der Seitenbügel im Bereich der Nuten gebildet werden, so daß die Stifte gegen die Seitenbügel anschlagen.

Bei einer Weiterbildung der Erfindung ist die Mittelstrebe an ihren den Eimern zugewandten Seitenflächen mit Vertiefungen zur Aufnahme der Ränder der Eimer versehen, um zu verhindern, daß insbesondere beim Auspressen des Mopbezugs Wasser zwischen Mittelstrebe und Eimer gelangen kann.

Das beim Auspressen des Mopbezuges auf die Mittelstrebe gelangende Wasser fließt weitgehend in die Eimer ab, wenn die Mittelstrebe, wie bei einer besonders vorteilhaften Weiterbildung der Erfindung, eine zu den Eimern hin geneigte Oberfläche aufweist.

Vorteilhafterweise können die zwischen den Querstreben angeordneten Längsstreben, welche einen Bodenrost für die Eimer bilden, ebenfalls lösbar angeordnet sein.

Die Längsstreben sind besonders leicht zu montieren, wenn sie zwischen die Querstreben eingesteckt oder eingeklemmt werden.

Weitere Ziele, Vorteile und Anwendungsmöglichkeiten der vorliegenden Erfindung ergeben sich aus der nachfolgenden Beschreibung eines Ausführungsbeispiels anhand der Zeichnung.

Es zeigen:
- Fig. 1:: eine perspektivische Ansicht eines erfindungsgemäßen Reinigungswagens mit einem Eimer,
- Fig. 2:: eine Seitenansicht des erfindungsgemäßen Reinigungswagens gemäß Fig. 1 mit einem Eimer,
- Fig. 3:: eine Frontansicht des erfindungsgemäßen Reinigungswagens gemäß Fig. 1 mit einem Eimer,
- Fig. 4:: eine Frontansicht eines erfindungsgemäßen Reinigungswagens ohne Eimer,
- Fig. 5:: eine Frontansicht der Mittelstrebe eines erfindungsgemäßen Reinigungswagens in eingebautem Zustand,
- Fig. 6:: eine teilweise geschnittene Seitenansicht der Mittelstrebe des erfindungsgemäßen Reinigungswagens mit eingesetztem Eimer,
- Fig. 7:: eine Seitenansicht der Mittelstrebe des erfindungsgemäßen Reinigungswagens in eingebautem Zustand, und
- Fig. 8:: einen senkrechten Schnitt durch die Mittelstrebe entlang der Linie VIII - VIII gemäß Fig. 7.

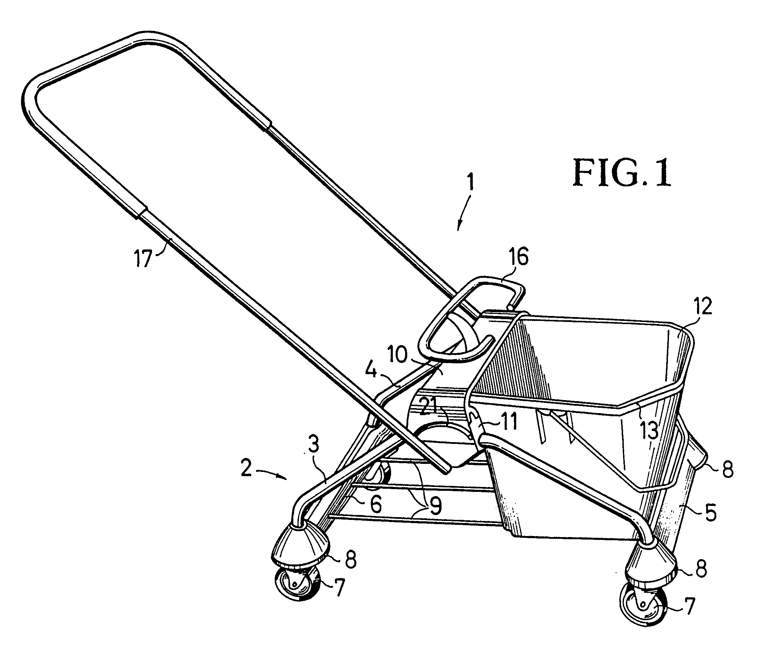

Der in Fig. 1 dargestellte Reinigungswagen 1 weist ein Grundgestell 2 auf, welches im wesentlichen aus zwei Seitenbügeln 3, 4 und zwei Querstreben 5, 6 gebildet ist, welche die gleichliegenden Enden der Seitenbügel 3, 4 miteinander verbinden. In die unteren Öffnungen der Seitenbügel 3, 4 sind Lenkrollen 7 eingesteckt, welche mit Stoßfängern 8 versehen sind. Die Querstreben 5, 6 sind über mehrere Längsstreben 9 miteinander verbunden. Im obersten Bereich in der Mitte der Seitenbügel 3, 4 ist eine brückenförmig ausgebildete Mittelstrebe 10 zur Verbindung der beiden Seitenbügel 3, 4 angeordnet. Die Mittelstrebe 10 ist mittels keilförmiger Spannelemente 11 mit den Seitenbügeln 3, 4 verspannt. Auf dem durch die Längsstreben 9 gebildeten Bodenrost steht ein Eimer 12, welcher mit seinem Rand 13 in eine (in Fig. 1 nicht sichtbare) Ausnehmung 14 der Mittelstrebe 10 eingreift. An der Mittelstrebe 10 ist in einer (ebenfalls nicht sichtbaren) Einstecköffnung 15 ein Pressenstativ 16 eingesetzt. Desweiteren ist an der Mittelstrebe 10 ein U-förmig ausgebildeter Handhabungsbügel 17 angebracht, welcher mit Führungsstiften 18 bzw. 19 in Bohrungen 20 bzw. Nuten 21 an der Mittelstrebe 10 bzw. an den Spannelementen 11 eingreift.

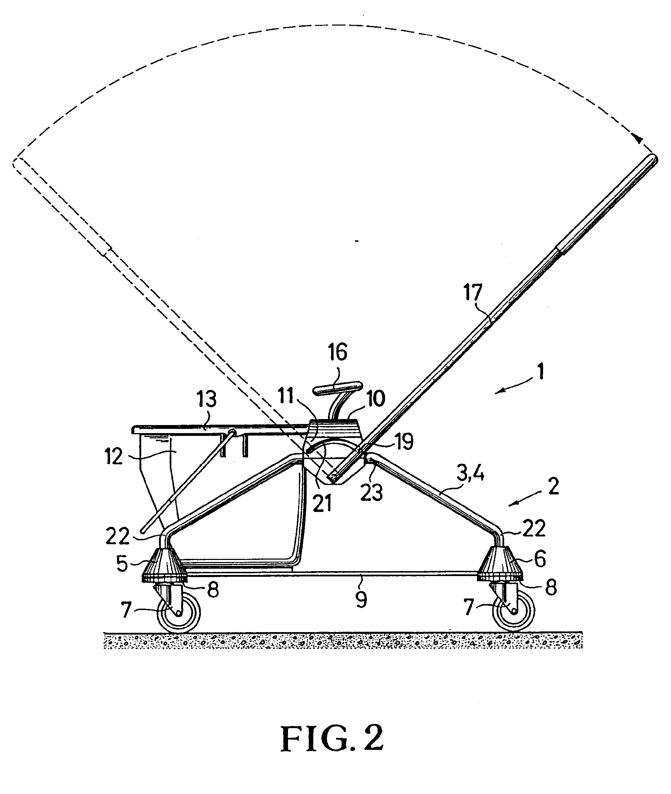

In Fig. 2 ist zu erkennen, daß die Seitenbügel 3, 4 je zwei senkrecht verlaufende äußere Abschnitte 22 aufweisen, an welchen die Querstreben 5, 6 und die Lenkrollen 7 mit den Stoßfängern 8 angebracht sind. In der Mitte der Seitenbügel 3, 4 befindet sich ein Mittelabschnitt 23, welcher etwa horizontal verläuft und an welchem die Mittelstrebe 10 angebracht ist. Der Eimer 12 steht auf den Längsstreben 9 auf und liegt an einer Seite an der Mittelstrebe 10 und an der anderen Seite an der jeweiligen Querstrebe 5 an, welche zu diesem Zweck die Längsstreben 9 geringfügig überragen. Der Handhabungsbügel 17 ist um ca. 90° um seine unten in der Mitte der Mittelstrebe 10 befindliche Drehachse verschwenkbar und wird mit Führungsstiften 19 in den an den Spannelementen 11 vorgesehenen Nuten 21 geführt.

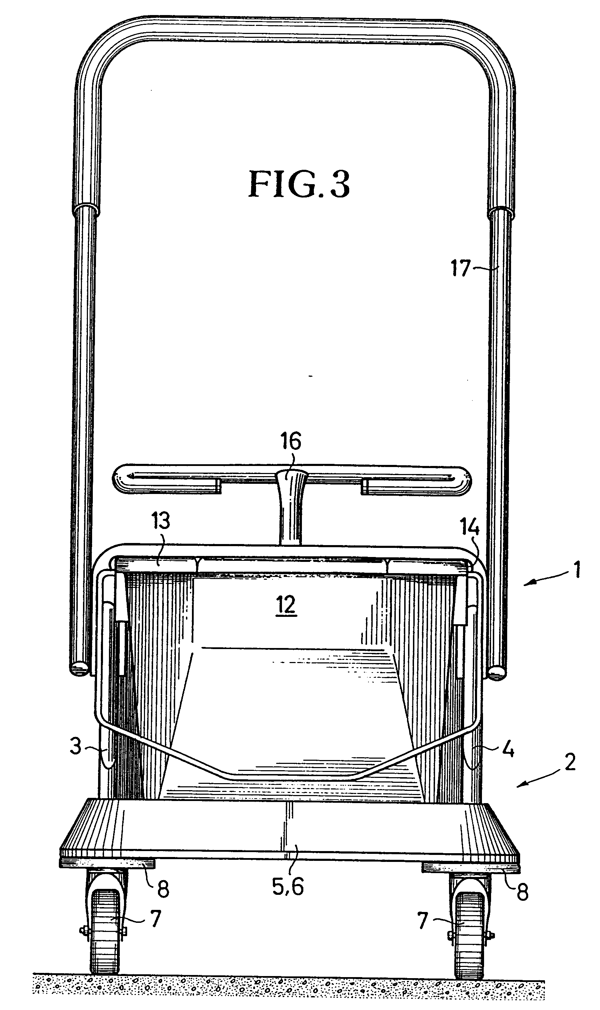

Wie in Fig. 3 zu sehen ist, ist die Mittelstrebe 10 in Höhe des vorspringenden Randes 13 des Eimers 12 mit Ausnehungen 14 versehen, in welche der Rand 13 des Eimers 12 eingreift.

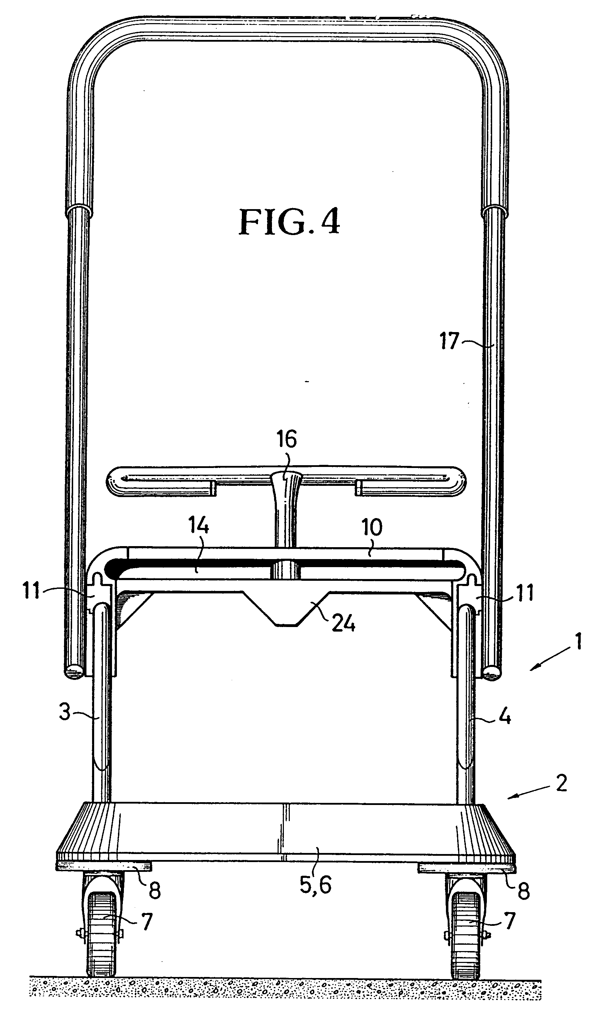

In Fig. 4 ist die Ausnehmung 14 in voller Länge zu erkennen. An der Unterseite der Mittelstrebe 10 ist eine Vorwölbung 24 vorgesehen, in welche sich die Einstecköffnung 15 für das Pressenstativ 16 erstreckt.

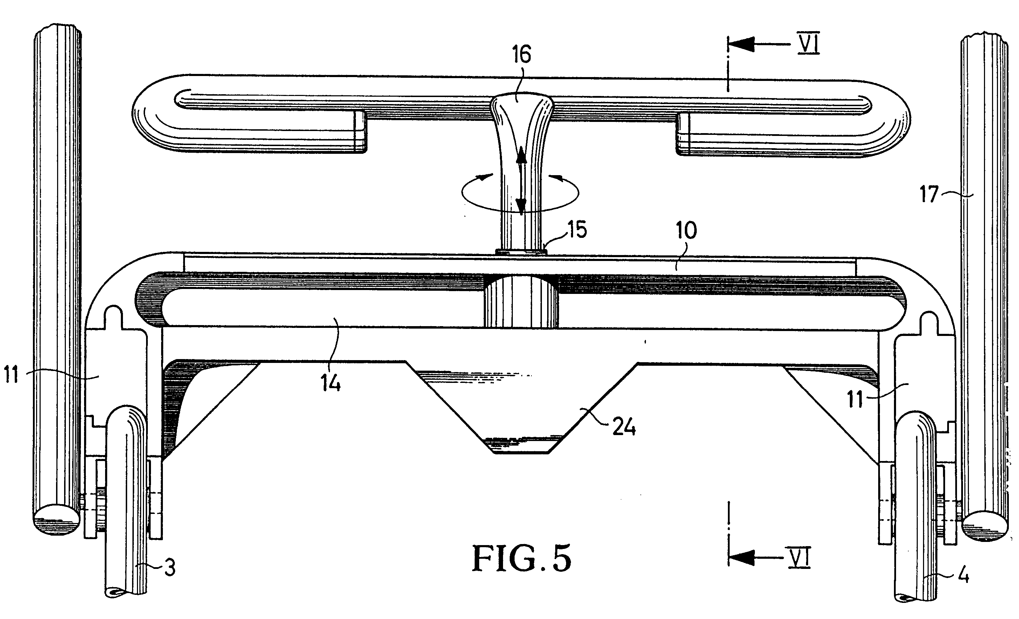

Noch deutlicher ist die Ausgestaltung der Mittelstrebe 10 in Fig. 5 dargestellt. Die Spannelemente 11 sind oberhalb der Seitenbügel 3, 4 in Längsrichtung formschlüssig in die Mittelstrebe 10 eingesetzt. Das Pressenstativ 16 ist in der Einstecköffnung 15 drehbar gelagert und kann senkrecht nach oben aus der Einstecköffnung 15 herausgezogen werden.

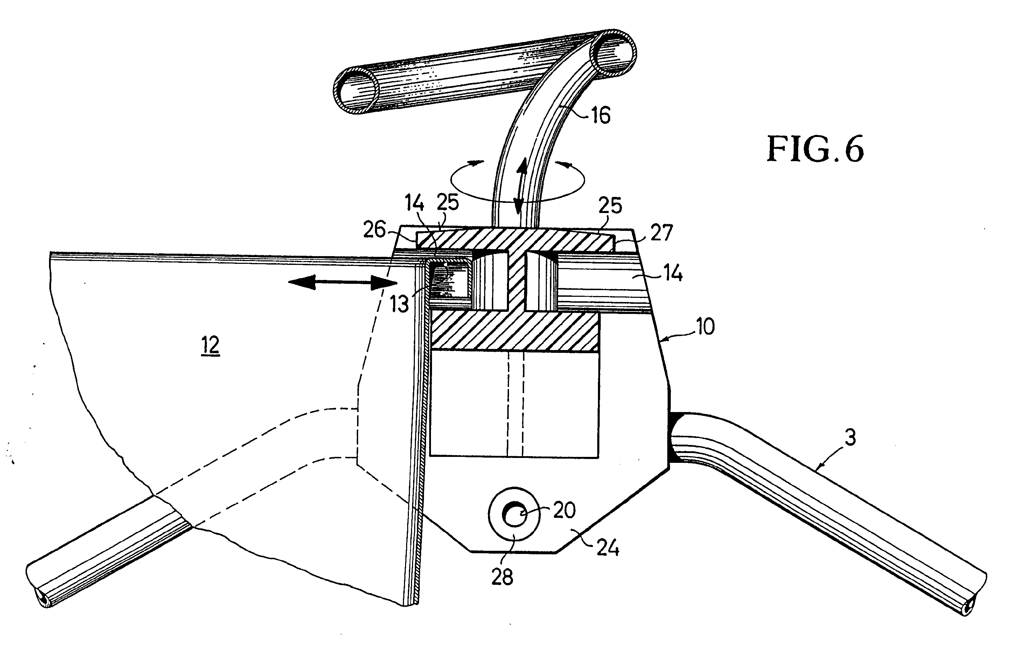

In Fig. 6 ist zu erkennen, wie der vorspringende Rand 13 des Eimers 12 von der Seite her in die Ausnehmung 14 der Mittelstrebe 10 einsetzbar ist. Die Oberseite der Mittelstrebe 10 weist in Richtung der Eimer 12 hin abfallende Abschrägungen 25 auf, wobei die Vorder- und Hinterkanten 26, 27 der Mittelstrebe 10 jeweils bis über den Innenraum der Eimer 12 vorstehen. In den senkrechten Seitenabschnitten der Mittelstrebe 10 sind zylinderförmige Führungsbuchsen 28 mit Bohrungen 20 für die Anlenkung des Handhabungsbügels 17 vorgesehen.

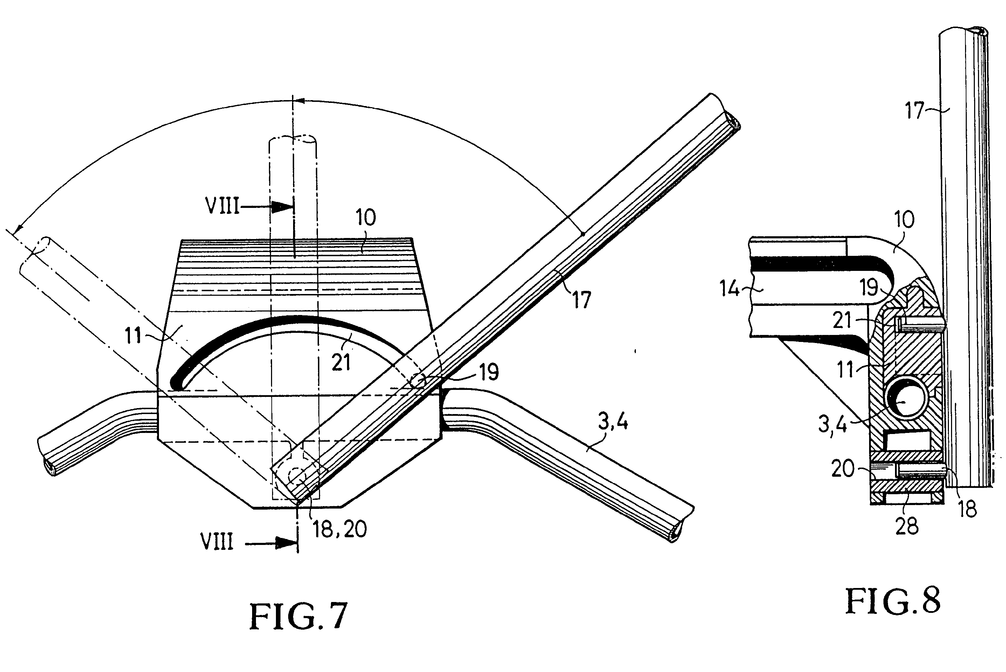

In Fig. 7 ist die Anbringung des Handhabungsbügels 17 an der Mittelstrebe 10 dargestellt. Die unteren Führungstifte 18 des Handhabungsbügels 17 sind in den Bohrungen 20 der Mittelstrebe 10 drehbar gelagert, während die oberen Führungsstifte 19 des Handhabungsbügels 17 in den kreissegmentförmig ausgebildeten Nuten 21 der Spannelemente 11 geführt sind.

Wie in Fig. 8 zu sehen ist, sind die Bohrungen 20 zur Aufnahme der unteren Führungsstifte 18 des Handhabungsbügels 17 in in die Mittelstrebe 10 eingesetzten Führungsbuchsen 28 vorgesehen.

Zur Montage des Reinigungswagens 1 werden zunächst die Längsstreben 9 in die Querstreben 5, 6 eingesteckt, um einen Rost zu bilden. Anschließend werden die Seitenbügel 3, 4 an die Mittelstrebe 10 mit Hilfe der Spannelemente 11 befestigt. Dann werden die Seitenbügel 3, 4 mit ihren senkrechten äußeren Abschnitten 22 durch die ebenfalls senkrecht verlaufenden Bohrungen in den Querstreben 5, 6 hindurchgeführt und mit den Stoßfängern 8 und den Lenkrollen 7 versehen. Nun wird der Handhabungsbügel 17 durch leichtes Auseinanderspreizen seiner beiden Seitenschenkel an der Mittelstrebe 10 befestigt, indem die Führungsstifte 18 in die Bohrungen 20 und die Führungsstifte 19 in die Nuten 21 eingesetzt werden. Zum Schluß wird das Pressenstativ 16 senkrecht von oben in die Einstecköffnung 15 der Mittelstrebe 10 eingesetzt, so daß die Drehbarkeit um seine vertikale Achse gewährleistet wird.

Zur Demontage des Reinigungswagens 1 ist entsprechend in umgekehrter Reihenfolge vorzugehen.

### Bezugszeichenliste:

- 1: Reinigungswagen
- 2: Grundgestell
- 3: Seitenbügel
- 4: Seitenbügel
- 5: Querstrebe
- 6: Querstrebe
- 7: Lenkrollen
- 8: Stoßfänger
- 9: Längsstreben
- 10: Mittelstrebe
- 11: Spannelemente
- 12: Eimer
- 13: Rand
- 14: Ausnehmungen
- 15: Einstecköffnung
- 16: Pressenstativ
- 17: Handhabungsbügel
- 18: Führungsstifte
- 19: Führungsstifte
- 20: Bohrungen
- 21: Nuten
- 22: äußere Abschnitte
- 23: Mittelabschnitte
- 24: Vorwölbung
- 25: Abschrägungen
- 26: Vorderkante
- 27: Hinterkante
- 28: Führungsbuchsen

## Patentansprüche

1. Reinigungswagen (1) zum Transport von Behältern wie Eimern (12) oder dgl. mit einem im wesentlichen aus Seitenbügeln (3, 4) und Querstreben (5, 6) bestehenden Grundgestell (2), welches mit Lenkrollen (7) und einer zur Aufnahme eines Pressenstativs (16) ausgebildeten Mittelstrebe (10) sowie einem Handhabungsbügel (17) versehen ist, dadurch gekennzeichnet, daß zumindest die Querstreben (5, 6) aus Kunststoff bestehen und die Seitenbügel (3, 4) und die Querstreben (5, 6) lösbar miteinander verbunden sind.

2. Reinigungswagen nach Anspruch 1, dadurch gekennzeichnet, daß die Seitenbügel (3, 4) mit den Querstreben (5, 6) zusammengesteckt oder zusammengeklemmt sind.

3. Reinigungswagen nach Anspruch 1 oder 2, dadurch gekennzeichnet, daß die Mittelstrebe (10) aus Kunststoff besteht und lösbar an den Seitenbügeln (3, 4) angebracht ist.

4. Reinigungswagen nach Anspruch 3, dadurch gekennzeichnet, daß die Mittelstrebe (10) mit den Seitenbügeln (3, 4) zusammengesteckt oder zusammengeklemmt ist.

5. Reinigungswagen nach Anspruch 3 oder 4, dadurch gekennzeichnet, daß die Mittelstrebe (10) die Seitenbügel (3, 4) im wesentlichen formschlüssig umgreift.

6. Reinigungswagen nach einem der Ansprüche 1 bis 5, dadurch gekennzeichnet, daß die Mittelstrebe (10) mittels vorzugsweise keilförmiger Spannelemente (11) an den Seitenbügeln (3, 4) angeklemmt ist.

7. Reinigungswagen nach einem der Ansprüche 1 bis 6, dadurch gekennzeichnet, daß die Mittelstrebe (10) mittels eines Sicherungsstiftes oder dgl. gegen Verrutschen an den Seitenbügeln (3, 4) gesichert ist.

8. Reinigungswagen nach einem der Ansprüche 1 bis 7, dadurch gekennzeichnet, daß der Handhabungsbügel (17) an die Mittelstrebe (10) angesteckt oder angeklemmt ist.

9. Reinigungswagen nach Anspruch 8, dadurch gekennzeichnet, daß der Handhabungsbügel (17) mittels Führungsstiften (19) in Nuten (21) der Mittelstrebe (10) bzw. der Spannelemente (11) geführt ist, wobei vorzugsweise Anschläge für die Führungsstifte (19) zur Festlegung des Schwenkbereichs des Handhabungsbügels (17) vorgesehen sind, welche auch von Abschnitten der Seitenbügel gebildet sein können.

10. Reinigungswagen nach einem der Ansprüche 1 bis 9, dadurch gekennzeichnet, daß die Mittelstrebe (10) an ihren den Behältern (12) zugewandten Seiten mit einer Ausnehmung (14) zur Aufnahme des vorspringenden Randes (13) des Behälters (12) versehen ist.

11. Reinigungswagen nach einem der Ansprüche 1 bis 10, dadurch gekennzeichnet, daß die Mittelstrebe (10) an ihrer Oberseite zu den Behältern (12) hin geneigte Abschrägungen (25) oder dgl. aufweist.

12. Reinigungswagen nach einem der Ansprüche 1 bis 11, dadurch gekennzeichnet, daß zwischen den Querstreben (5, 6) mehrere einen Bodenrost bildende Längsstreben (9) lösbar angeordnet sind.

13. Reinigungswagen nach Anspruch 12, dadurch gekennzeichnet, daß die Längsstreben (9) zwischen die Querstreben (5, 6) eingesteckt oder eingeklemmt sind.

## Claims

1. A cleaning trolley (1) for the transport of containers such as buckets (12) or the like, having a main frame (2) consisting substantially of side members (3,4) and cross members (5,6) equipped with steering rollers (7), a middle piece (10) adapted to carry a pressing stand (16) and a handle (17), characterized in that the cross members (5,6) at least are made from a synthetic material, the side members (3,4) and the cross members (5,6) being joined together detachably.

2. A cleaning trolley as in Claim 1, characterized in that the side members (3,4) are inserted into or bonded to the cross members (5,6).

3. A cleaning trolley as in Claim 1 or 2, characterized in that the middle piece (10) is made from a synthetic material and joined detachably to the side members (3,4).

4. A cleaning trolley as in Claim 3, characterized in that the middle piece (10) is inserted into or bonded to the side members (3,4).

5. A cleaning trolley as in Claim 3 or 4, characterized in that the middle piece (10) embraces the side members (3,4) substantially rigidly.

6. A cleaning trolley as in any of Claims 1 to 5, characterized in that the middle piece (10) is clamped to the side members (3,4) by means of preferably wedge-shaped grips (11).

7. A cleaning trolley as in any of Claims 1 to 6, characterized in that the middle piece (10) is secured against chafing on the side members (3,4) by means of a locking pin or the like.

8. A cleaning trolley as in any of Claims 1 to 7, characterized in that the handle (17) is inserted into or bonded to the middle piece (10).

9. A cleaning trolley as in Claim 8, characterized in that the handle (17) is located by means of guide pins (19) in grooves (21) in the middle piece (10) and/or the grips (11), the range of settings for the handle (17) preferably being determined by stops for the guide pins (19), which stops can be formed by sections of the side members.

10. A cleaning trolley as in any of Claims 1 to 9, characterized in that a recess (14) is provided on the sides of the middle piece (10) facing the containers (12), to accommodate the projecting rims (13) of the container(s) (12).

11. A cleaning trolley as in any of Claims 1 to 10, characterized in that the top face of the middle piece (10) facing the containers (12) has inclined chamfers (25) or the like.

12. A cleaning trolley as in any of Claims 1 to 11, characterized in that two or more longitudinal struts (9) forming a floor grating are disposed removably between the cross members (5,6).

13. A cleaning trolley as in Claim 12, characterized in that the longitudinal struts (9) are inserted between or bonded to the cross members (5,6).

## Revendications

1. Chariot de nettoyage (1) destiné au transport de récipients tels que des sceaux (12) ou analogues, comportant un châssis (2) qui est constitué essentiellement d'arceaux latéraux (3, 4) et de traverses (5, 6) et est équipé de roulettes pivotantes (7), une traverse médiane (10) agencée pour recevoir un support d'essoreuse (16) ainsi qu'une poignée en arceau (17), caractérisé par le fait que les traverses au moins (5, 6) sont en matière plastique et que les arceaux latéraux (3, 4) et les traverses (5, 6) sont reliés entre eux de manière démontable.

2. Chariot de nettoyage selon la revendication 1, caractérisé par le fait que les arceaux latéraux (3, 4) sont assemblés avec les traverses (5, 6) par emboîtement ou par serrage.

3. Chariot de nettoyage selon la revendication 1 ou 2, caractérisé par le fait que la traverse médiane (10) est en matière plastique et est fixée avec possibilité de démontage aux arceaux latéraux (3, 4).

4. Chariot de nettoyage selon la revendication 3, caractérisé par le fait que la traverse médiane (10) est assemblée avec les arceaux latéraux (3, 4) par emboîtement ou par serrage.

5. Chariot de nettoyage selon la revendication 3 ou 4, caractérisé par le fait que la traverse médiane (10) entoure les arceaux latéraux (3, 4) essentiellement par complémentarité de formes.

6. Chariot de nettoyage selon l'une des revendications 1 à 5, caractérisé par le fait que la traverse médiane (10) est serrée sur les arceaux latéraux (3, 4) à l'aide de préférence de moyens de serrage (11) en forme de coins.

7. Chariot de nettoyage selon l'une des revendications 1 à 6, caractérisé par le fait qu'une goupille de sécurité ou analogue empêche le glissement de la traverse médiane (10) sur les arceaux latéraux (3, 4).

8. Chariot de nettoyage selon l'une des revendications 1 à 7, caractérisé par le fait que la poignée en arceau (17) est assemblée avec la traverse médiane (10) par emboîtement ou par serrage.

9. Chariot de nettoyage selon la revendication 8, caractérisé par le fait que la poignée en arceau (17) est guidée par des axes de guidage (19) dans des rainures (21) de la traverse médiane (10) ou des moyens de serrage (11), des butées pour les axes de guidage (17) étant de préférence prévues afin de limiter la zone de pivotement de la poignée en arceau (17), lesquelles butées peuvent également constituées par des parties des arceaux latéraux.

10. Chariot de nettoyage selon l'une des revendications 1 à 9, caractérisé par le fait que la traverse médiane (10), sur ses côtés tournés vers le récipient, est pourvue d'un évidement (14) destiné à recevoir le bord en saillie (13) dudit récipient (12).

11. Chariot de nettoyage selon l'une des revendications 1 à 10, caractérisé par le fait que la traverse médiane (10) présente sur sa face supérieure des surfaces inclinées (25) ou analogues qui sont inclinées en direction des récipients (12).

12. Chariot de nettoyage selon l'une des revendications 1 à 11, caractérisé par le fait que plusieurs pièces longitudinales (9) formant une grille-support sont disposées avec possibilité de démontage entre les traverses (5, 6).

13. Chariot de nettoyage selon l'une des revendications 12, caractérisé par le fait que les pièces longitudinales (9) sont montées entre les traverses (5, 6) par emboîtement ou par serrage.
